# EUROPEAN PATENT SPECIFICATION

(11) **EP 1 333 904 B1**
(45) Date of publication and mention of the grant of the patent: **15.03.2006**
(21) Application number: 01974539.7
(22) Date of filing: 17.10.2001
(51) Int. Cl.: B01D 33/00

(54) **A SCREEN FOR A SHALE SHAKER**
SIEBBODEN FÜR SCHLAMMSCHÜTTELSIEB
CRIBLE POUR TAMIS VIBRANT

(30) Priority: 25.10.2000 US 696662
(43) Date of publication of application: 13.08.2003
(73) Proprietor: Varco I/P, Inc., Houston, TX 77042 (US)
(72) Inventor: ADAMS, Thomas, Cole, Hockley, TX 77447 (US); SCHULTE, David Lee, Jr., Broussard, LA 70518 (US); SEYFFERT, Kenneth, Wayne, Houston, TX 77018 (US); LARGENT, David, Wayne, Cleveland, TX 77327 (US); MCCLUNG III, Guy, Lamont, Spring, TX 77379 (US)
(74) Representative: Lucas, Brian Ronald
(86) International application number: PCT/GB2001/004599
(87) International publication number: WO 2002/034358

(56) References cited:
- WO-A-00/25942
- US-A- 2 457 018
- US-A- 5 888 336
- US-A- 6 029 824

## Description

This invention relates to a screen for a shale shaker. The invention also relates to a shale shaker provided with a screen of the invention.

Vibratory separators have been used for many years to separate particles in a wide array of industrial applications. One common application for vibratory separators is in drilling operations to separate particles suspended in drilling mud. Such vibratory separators are known as shale shakers. If drilled solids are not removed from the drilling mud used during the drilling operation, re-circulation of the drilled solids can create weight, viscosity, and gel problems in the mud, as well as increasing wear on mud pumps and other mechanical equipment used for drilling.

A shale shaker generally includes at least one screen which is generally flat and mounted generally horizontally on a vibrating mechanism or shaker that imparts either a rapidly reciprocating linear, elliptical or circular motion to the screen. A shale shaker may comprise a series of screens arranged in tiered or flat disposition with respect to each other. The screens generally form part of a screen assembly. The screen assemblies are inserted and resiliently suspended or mounted into the shale shaker prior to use. In use, the vibrating mechanism vibrates the screen. Circulated drilling mud is poured on to a back end of the vibrating screen, usually from a pan mounted above the screen. The material generally flows toward the front end of the screen. Large particles are unable to pass through the screen, remaining on top of the screen and moving toward the front of the screen where they are collected. The smaller particles and fluid flows through the screen and collects in a pan beneath the screen. An example of a typical prior art shaker system is shown in U.S. Patent 5,190,645.

A screen may comprise a coarse screen cloth with two or more overlying layers of fine screening material, such as a wire cloth. The prior art discloses that the layers may be adhered or bonded together; and that a support, supports, or a perforated or apertured plate or frame may be used beneath the layers. The fineness or coarseness of the mesh of a screen may vary depending upon mud flow rate and the size of the solids to be removed. The screening material may be made from wire mesh, which is generally described with reference to the diameter of the wires from which it is woven, the number wires per unit length (called a mesh count) and the shape or size of the openings between wires. Wire mesh comes in various grades. "Market" 11 grade mesh generally has wires of relative large diameter. "Mill" grade has comparatively smaller diameter wires and "bolting cloth" may have the smallest diameter wire. The type of mesh chosen depends on the application.

Many screens used with shale shakers are flat or nearly flat, i.e. substantially two-dimensional. Other screens, due to corrugated, depressed, or raised surfaces are three-dimensional. U.S. Patents 5,417,793; 5,417,858; and 5,417,859 disclose non-flat screens for use with shale shakers. The three-dimensional screens may comprise one or more layers of screening material overlaying one another. These screens have a lower planar apertured plate with a multiplicity of spaced-apart apertures or openings therethrough. Undersides of troughs of undulating screening material are bonded to the apertured plate.

PCT Publication No. WO 00/25942 discloses a screen comprising screening material having ramps formed therein. However, it has been found that, in use, the ramps are likely to be damaged before damage occurs in an equivalent flat screen. It has also been found that some large particles have difficulty climbing the ramps.

The layers of screening material need to be held together in order to inhibit excess wear due to, for example, rubbing or clashing.

It is also important to inhibit particles trapping themselves between layers of screening material. A degree of movement between the layers of screening material is required for this purpose, i.e. to have an ability to self clean.

It is also important to join the screen cloths together in a way which maximises screening area of the screens. The shale shakers are a predetermined size and it is advantageous to have the greatest possible screening area therein.

It is advantageous to be able to repair screens with relative ease and speed.

The document WO-A-0064558 published on 02.11.00 and claiming the priority of 22.04.99 describes a screen comprising a ramp made of screening material and a flat layer of screen material.

According to the present invention, there is provided a screen for a shale shaker, said screen comprising at least one substantially flat layer of screening material characterised in that at least one ramp formed of screening material is located on said at least one flat layer of screening material, said at least one flat layer of screening material having mesh size substantially equal to or smaller than the mesh size of said at least one ramp.

Other aspects and features of the invention are set out in claims 2 to 23.

The invention also provides a shale shaker comprising a screen of the invention, said shale shaker further comprising a vibratory mechanism and a basket.

For a better understanding of the present invention, reference will now be made, by way of example, to the accompanying drawings, in which:
Figure 1A is a perspective view of a first embodiment of a screen in accordance with the present invention;
Figure 1B is a perspective view of a second embodiment of a screen in accordance with the present invention;
Figure 2 is a perspective view of a third embodiment of a screen in accordance with the present invention;
Figure 3A shows, in perspective, five alternative ramps arranged parallel to each other, for a screen in accordance with the present invention; Figure 3B shows end elevations of the five alternative ramps shown in Figure 3A;
Figure 4A is a perspective view of a fourth embodiment of a screen in accordance with the present invention; Figures 4B and 4C represent cross-sectional views of parts of the ramps of the screen assembly of Figure 4A; Figures 4D and 4E present alternative configurations for ramps for a screen in accordance with the present invention;
Figure 5 is a perspective view of a fifth screen in accordance with the present invention;
Figures 6A, 7A, 8A and 9A represents a side view of a piece of material, screen or mesh which is formed into the screen ramps shown, respectively in Figures 6B, 7B, 8B, 9B and 9C;
Figure 10A is a side view of a ramp of a screen in accordance with the present invention; Figure 10B shows the ramp of Figure 10A on a screen in accordance with the present invention;
Figure 11 is a side view of a ramp of a screen (as in Figure 10A) on a screen in accordance with the present invention;
Figures 12A to 12C are each a side view of a screen in accordance with the present invention, shown in use at various stages of operation with a representative piece of material;
Figure 13A is a top view of ramps in accordance with the present invention; Figure 13B is a cross-section view of the screen assembly of Figure
Figure 14 is a cross-section view of a screen assembly according to the present invention.
Figure 15 is a cross-section view of a screen assembly according to the present invention.
Figure 16 is a perspective view of a channel member for a screen according to the present invention.
Figures 17A and 17B are cross-section views of channel members for a screen according to the present invention.
Figure 17C presents perspective views of channel members for a screen according to the present invention.

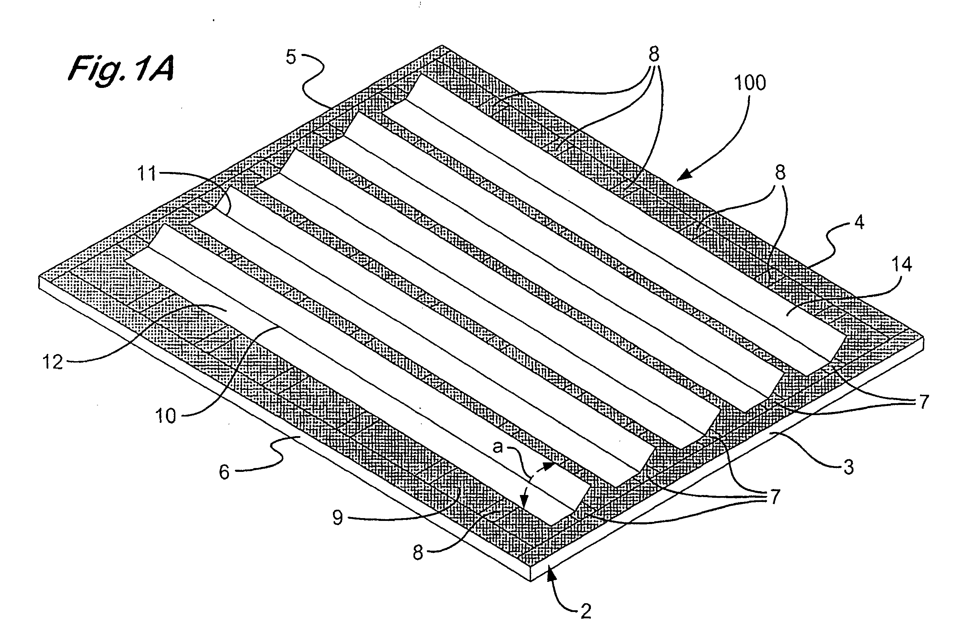

Referring to Figure 1A, there is shown a screen assembly 100 which has a tubular frame 2 comprising interconnected outer frame members 3, 4, 5, 6 and crossbars 7, 8 each with two spaced-apart ends connected to an outer frame member.

Screening material 9 is located over the crossbars 7, 8 and attached to the outer frame side members 3, 5 and outer frame end members 4, 6 (and, may also be connected to the crossbars 7, 8) by any suitable known method, connectors, glue, welding, etc. The screening material 9 may be any known screen and/or mesh; in any combination of one, two, three or more layers; connected, fused, glued, and/or sintered together in any known way either substantially over the entire surface of screening material or only in portions thereof.

Connected on top of the screening material 9 are a plurality of spaced-apart ramps 10 each with a base 12 and a portion 14 projecting up from the screening material 9. The ramps may be made from ???? As shown there is an obtuse angle a between each ramp's base 12 and projecting portion 14. The angle a may be any desired angle from zero to one hundred eighty degrees (i.e., acute, right, obtuse or straight angle). In certain aspects the base portion of one, some or all of the ramps may be deleted, and the projecting portions alone are connected to the screening material. The ramps (and any other screen component disclosed herein for connection to a screen assembly) (the bases and/or the projecting portions) may be connected to the screening material with any suitable connector or method, including, but not limited to, with screws, rivets, welding, gluing, releasable cooperating hook-loop fastener material, solder, adhesive, tape (single or double-sided), and/or sintering.

As shown in Figure 1A a line 11 defining a boundary between each ramp base and projecting portion is located above a crossbar 7 and portions of each base are over parts of the crossbars 8. It is within the scope of this invention for these ramp base portions to also be connected to these cross bar portions as well as to the screening material; alternatively, there is no such connection, connection only to the crossbars 7, or connection only to the crossbars 8 (as can be the case for any screen assembly according to the present invention).

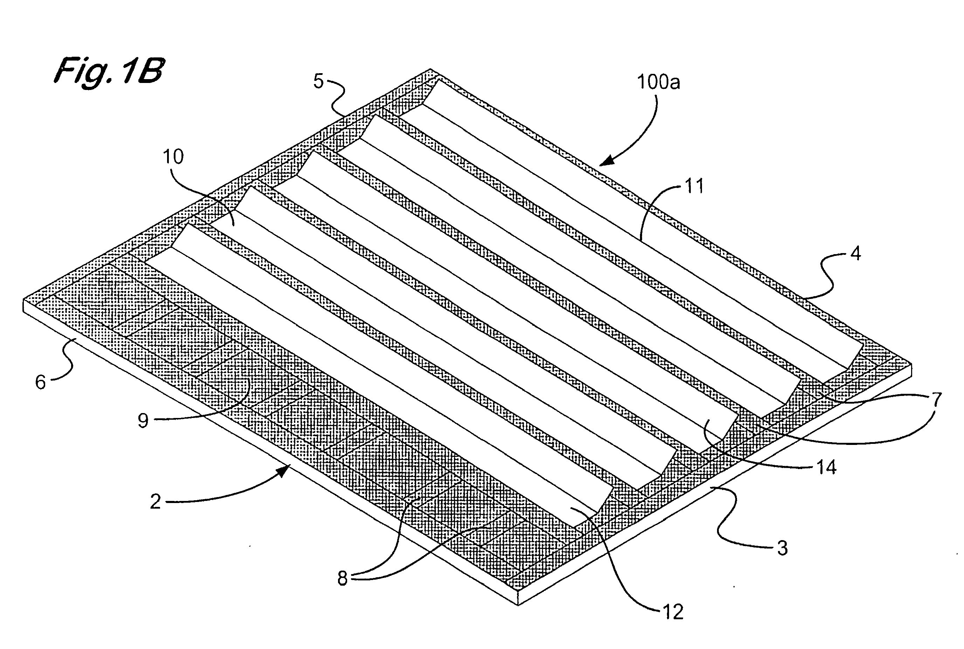

Figure 1B shows second embodiment of a screen assembly, generally identified by the reference numeral 100a. Parts like those shown in Figure 1a are identified with the same reference numerals. In the screen assembly 100a, the ramp bases 12 are positioned above the crossbars 7 with the lines 11 located between crossbars, i.e., not over a crossbar. Alternatively, it is within the scope of this invention to place one or some of the ramps as in Figure 1A and one or some of the ramps as in Figure 1B. Also as shown the ramps are generally parallel to the crossbars 7 and the outer frame members 4, 6; but it is within the scope of this invention for the ramps to be at an angle to these items and, in one aspect for different ramps to be at different angles, for example, but not limited to, a plurality of spaced-apart ramps with every other ramp at one angle and the ramps between them at a different angle - which in one aspect includes ramps with an acute angle between adjacent ramp ends.

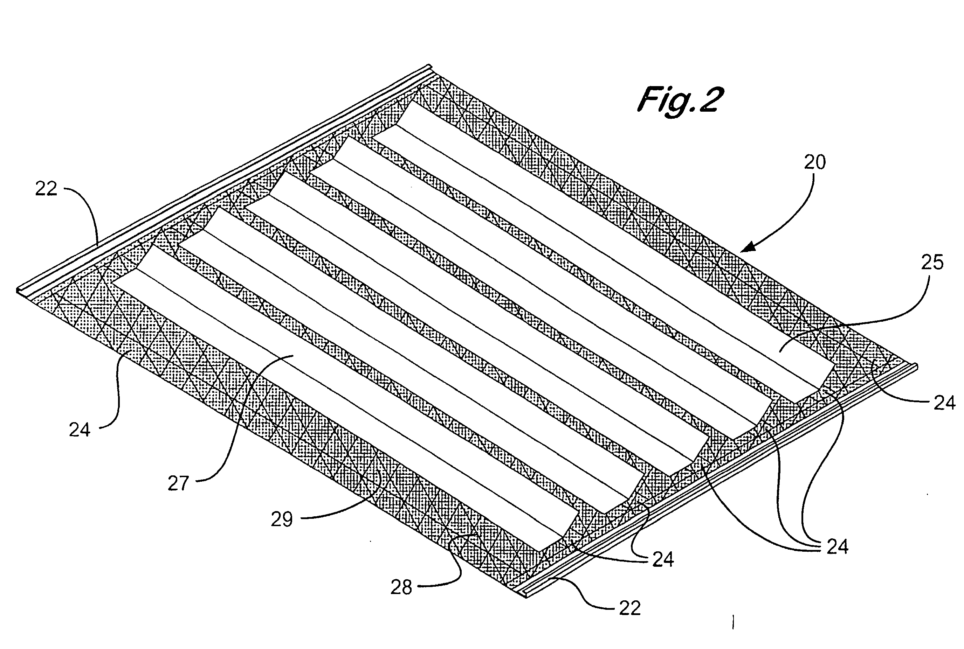

Figure 2 shows a third embodiment of a screen assembly 20 which has two spaced-apart hook strips 22 between which and to which are connected a plurality of spaced-apart support strips 24, which may be flexible, in that the screen assembly may be stretched over a curved or flat surface and held in position by clamps tensioning the screen assembly via the hook strips 22. Screening material 29 is arranged on the support strips 24 and between the hook strips 22. The screening material 29 may be of the type referred to in Figures 1A & 1B and may include a diamond-patterned layer 28 of, for example, metal, glue, plastic, adhesive, rubber, or epoxy to adhere multiple layers of screening material 29 together and, may also adhere the layer or layers of screening material 29 to the support strips 24. A plurality of ramps 23, like the ramps 10 above, are connected to the screening material 29. A line 25 defining a boundary between a base 21 and a projecting portion 27 of each ramp is located above a strip 24; but it is within the scope of this invention, as with the screen assembly of Figure 1A, to locate this line as desired. The hook strips 22 may be of any known shape and/or configuration for hooking apparatus for shale shakers and vibratory separators (including but not limited to any known side channels, hooks, or strips for mounting a screen to a shale shaker).

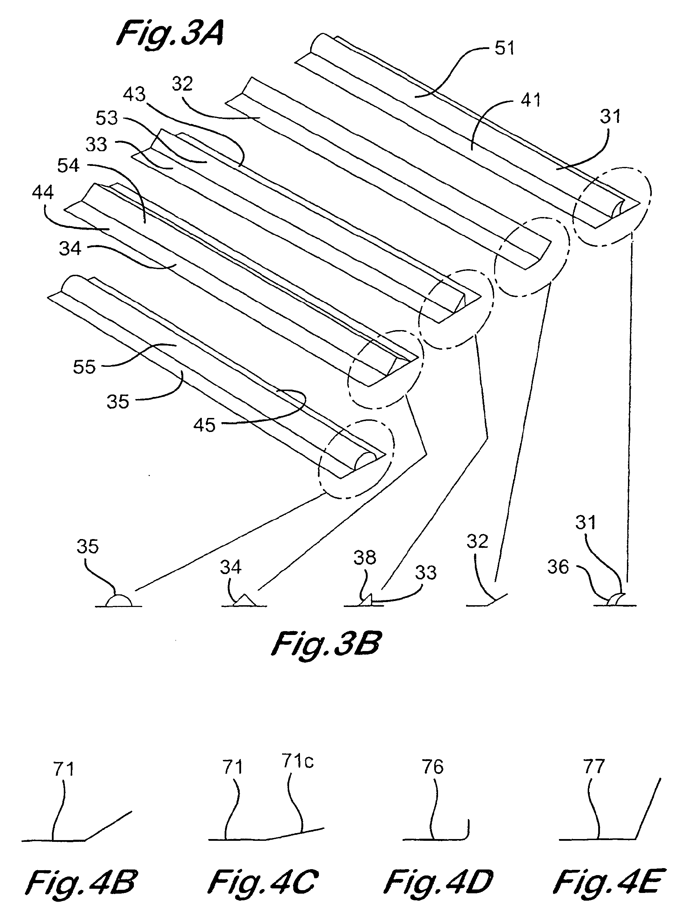

Figure 3A discloses a five alternative ramps (31 - 35) useful with any screen assembly and which may be used instead of any ramp shown on any screen assembly herein; alternatively, a combination of any of these ramps on a single screen assembly may be used according to the present invention.

Figure 3B shows end views of the ramps of Figure 3A. Certain of the ramps have an enclosed area and, therefore, an end which, may be open or closed (for example, as in ramps 31, 33, 34, 35). It is within the scope of this invention to leave these ramp ends open; partially open (for example, top, bottom, one side or the other side closed off); or closed off either with solid material or with screen or mesh (as shown in the ramps 31 and 33 closed off, respectively with screening material 36, 38). Screening material used to close off or partially close off a ramp end may be any screening material disclosed herein and the ramp ends thus closed-off may be flat (i.e. perpendicular to the surface of the screen assembly) or non-flat, for example, as disclosed in PCT Publication No. WO 01/19492 (and USSN 09/634,610 filed 8/5/00), incorporated fully herein for all purposes. The ramps 31, 33, 34, 35 each has a base 41, 43, 44, 45, respectively, with portions on either side of a projecting ramp portion 51, 53, 54, 55, respectively. Suitable connection of these base portions on either or both sides of the projecting portions may be made to screening material of a screen assembly according to the present invention. It is also within the scope of the present invention to fold either or both base portions either under or over prior to attaching the ramps to a screen assembly.

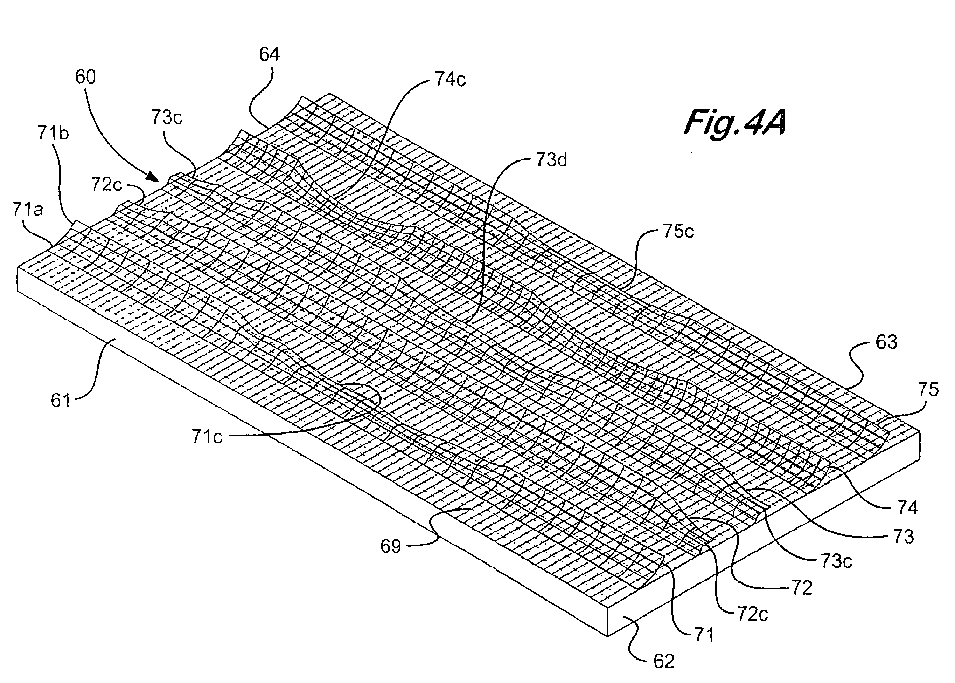

Figure 4A shows a screen assembly 60 comprising an outer frame with interconnected frame members 61, 62, 63, 64 (however it is within the scope of this invention for the ramps of .the screen 60 to be used on a screen like that in Figure 2 that has hookstrip sides). Ramps 71 - 75 are connected to screening material 69.

In one aspect the ramps 71 - 75 are made of mesh or screen or a combination thereof that can be folded down or pushed down and remains in the "down" position, i.e., it has memory. As indicated any desired part of a ramp may be positioned lower than the other parts.

Ramp 71 has a base 71a, a projecting portion 71b, and a portion 71c that has been pushed down. Figure 4A shows an end view of the ramp 71 and Figure 4B shows a cross-section view of the lower portion 71C. Ramp 72 has lower, pushed down portions 72c; ramp 73 has lower, pushed down portions 73c and 73d; ramp 74 has lower pushed down portions 74c; and ramp 75 has lower pushed down portions 75c. Alternatively, the ramps 71 - 75 are preformed of suitable material which has no memory (does not retain a shape, position, or configuration into which it is pressed, pushed, or moved), for example, metal, rubber, or solid plastic (with or without fluid-passing perforations across its surface). All of the ramps of a particular screen assembly according to the present invention may be like any one of the ramps 71 - 75; or any combination of such ramps may be used according to the present invention. It is also within the scope of this invention to make different parts of a ramp out of different screening material. For example, in the ramp 71 the base 71a and part 71b may be made from screening material of a mesh size similar to that of the screening material 69 and the portion 71c may be made of a much finer mesh that lays down (rather than a mesh with memory that needs to be pushed or folded down). Upper or projecting portions of the ramps (for example, portions 71b, 27, 14) may be made of non-memory material that is so non-rigid that it moves up and down or flaps uncontrollably as the screen assembly is vibrated (for example, a shale shaker processing fluid with drilling mud and drill cuttings or other solids entrained therein). Any projecting portion or upper portion of a screen or ramp disclosed herein may be made of multiple layers, for example, a non-memory movable layer with a one, two, or more lower and/or upper layer(s) of metal or of synthetic material, perforated or not, to inhibit or prevent up/down or uncontrollable flapping and/or to inhibit or prevent wear of and damage to such a non-memory layer. Optionally, different parts of a single projecting portion may have one or more of these reinforced areas along the length of the projecting portion. In one aspect a coarse mesh is used beneath a projecting portion and a fine mesh is used on top so that fine solids or particles separated from a fluid more easily climb up the projecting portion. Alternatively, a reinforcing material (mesh, screen, solid) may be used around the top, bottom, and/or side edges of a projecting portion to strengthen the projecting portion. Also, an upstanding ramp portion or a front ramp portion may be made of a very coarse mesh, for example, 19 mesh, for strength and stability.

Figures 4D and 4E illustrate other possible ramp end profiles for ramps 76, 77 and relative sizes for base and projecting portions which may be used for any ramp herein. Also any number (for example, one, two, three, four, five, six, or more) of any ramp 71 - 75 may be used on any screen.

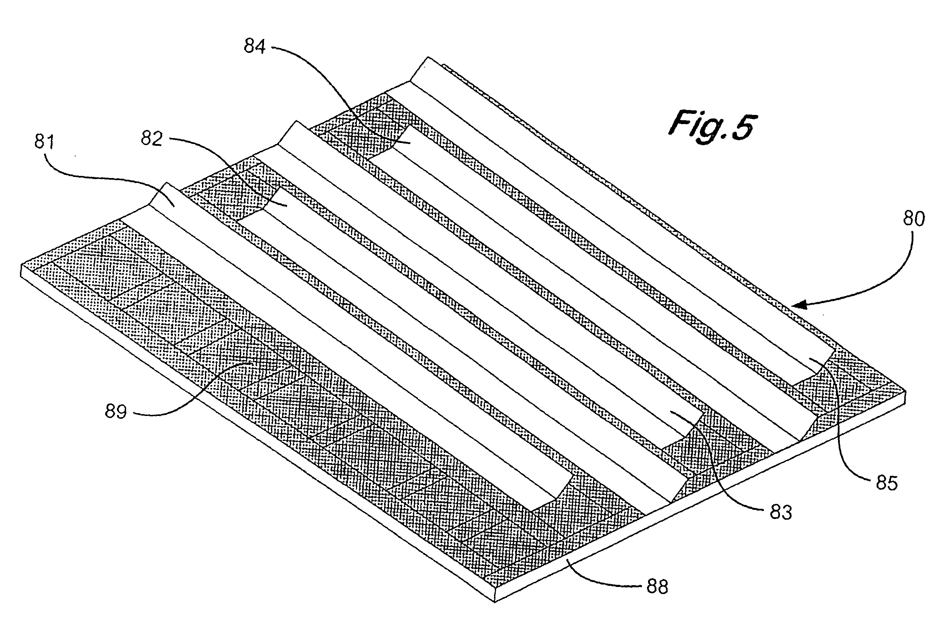

Figure 5 shows a screen assembly 80 according to the present invention which has an outer frame 88 (like the frame of the screen 60) with crossbars and screening material 89 like that of the screen 60. Ramps 81 to 85 represent any ramp according to the present invention. As shown, the ramps are offset from each other, as may be any two ramps of any screen assembly according to the present invention and any number (for example, one, two, three, four, five, six, or more) of any ramp may be used. Also any portion of any ramp may be deleted providing a flow path through that ramp at that area. In one particular embodiment central portions for example, between one and fourteen inches wide, are deleted from alternating ramps, beginning with ramp 81 or with ramp 82.

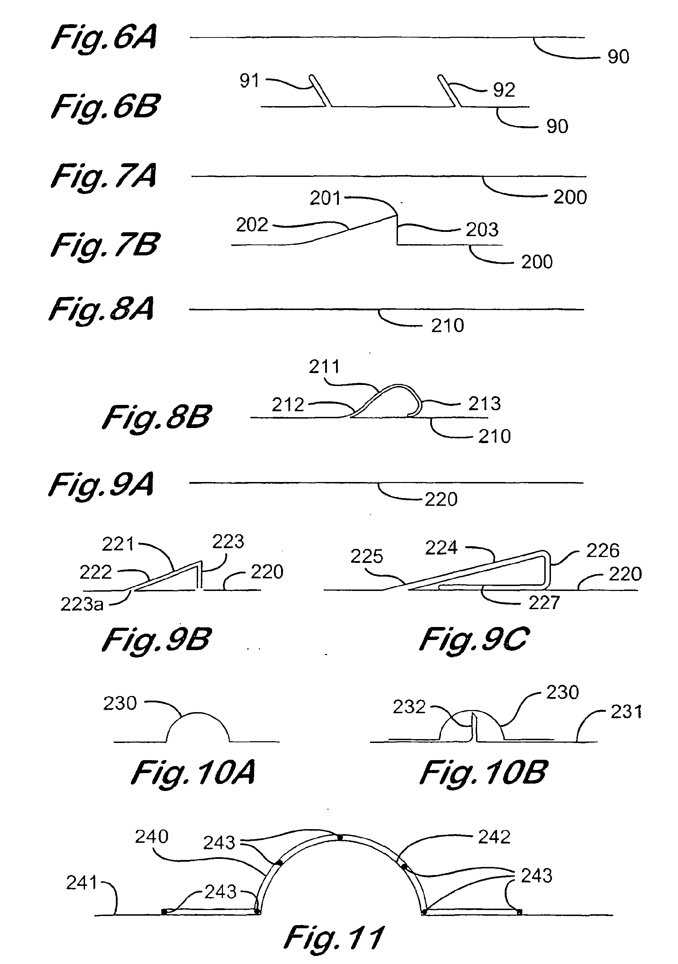

Figure 6A shows a piece of screening material 90 which may be any screening material or combination thereof disclosed herein. As shown in Figure 6B, the screening material 90 has been formed or folded to form upwardly-projecting portions 91 and 92 that can serve as ramps for any screen assembly according to the present invention with one or more such ramps. As shown the lower ends of the upwardly projecting portions are open; but it is within the scope of the present invention to close off these ends (or the ends of any ramp disclosed herein) with solids material or with material such as screen or mesh that permits fluid flow therethrough.

Figure 7A shows a piece of screening material 200 which may be any screening material disclosed herein. As shown in Figure 7B the screening material 200 has been formed or folded to make a ramp 201 with an inclined portion 202 and a wall portion 203. The area under the ramp may be open or closed off (with solids or with fluid-passing material).

Figure 8A shows a piece of screening material 210 which may be any screening material disclosed herein. As shown in Figure 8B the screening material 210 has been formed or folded to make a ramp 211 with an inclined portion 212 and a front portion 213. The open area under the inclined portion may be open or closed off (with solids or with fluid-passing material). The front portion 113 is shown as contacting the screening material 210. It is within the scope of this invention to also connect the front portion 213 to the screening material 210 either all along the length of a ramp with such a profile or at spaced-apart points along the length.

Figure 9A shows a piece of screening material 220 which may be any screening material disclosed herein. As shown in Figure 9B the screening material 220 has been formed or folded to make a ramp 221 with an inclined portion 222 and a front portion 223. The open area (223a) under the inclined portion may be open or closed off (with solids or with fluid-passing material). The front portion 223 is shown as contacting the screening material 220. It is within the scope of this invention to also connect the front portion 223 to the screening material 220 either all along the length of a ramp with such a profile or at spaced-apart points along the length. Figure 9C shows another ramp 224 made (formed or folded) with the screening material 220. The ramp 224 has an inclined portion 225, a front portion 226 and a lower portion 227. The front portion 226 may be connected to the screening material at points or all along its length, as may be the lower portion 227. Also the end of the lower portion 227 may touch or be connected to the inclined portion 225. Alternatively, the portion 227 may extend out in front of the ramp rather than beneath the portion 224.

Figure 10A shows an end profile of a ramp 230 according to the present invention, for example, like the ramp 35 above, Figure 3A. Figure 10B shows the ramp 230 in place connected to screening material 231 which has an upwardly projecting portion 232 (formed or folded into the screening material). The ramp 230 may be connected to the portion 232. Any ramp according to the present invention with a raised portion may be so-positioned above any screening material disclosed herein with an upwardly-projecting portion.

Figure 11 shows a ramp 240 (end view or cross-section) according to the present invention (like the ramp 230) connected to screening material (any disclosed herein or any combination thereof) 241 with welds, connectors or glue 243 (any one of which or all but one may be deleted). An upwardly-projecting portion 242 of the screening material 241 has been formed or folded to correspond in shape to the projecting portion of the ramp 240. For any shape ramp according to the present invention screening material can be formed or shaped to correspond in shape to a ramp shape for positioning of and/or connection of a ramp to screening material. Any ramp described herein as made or formed of screening material may be made or formed of one, two, three or more layers of screening material and/or mesh.

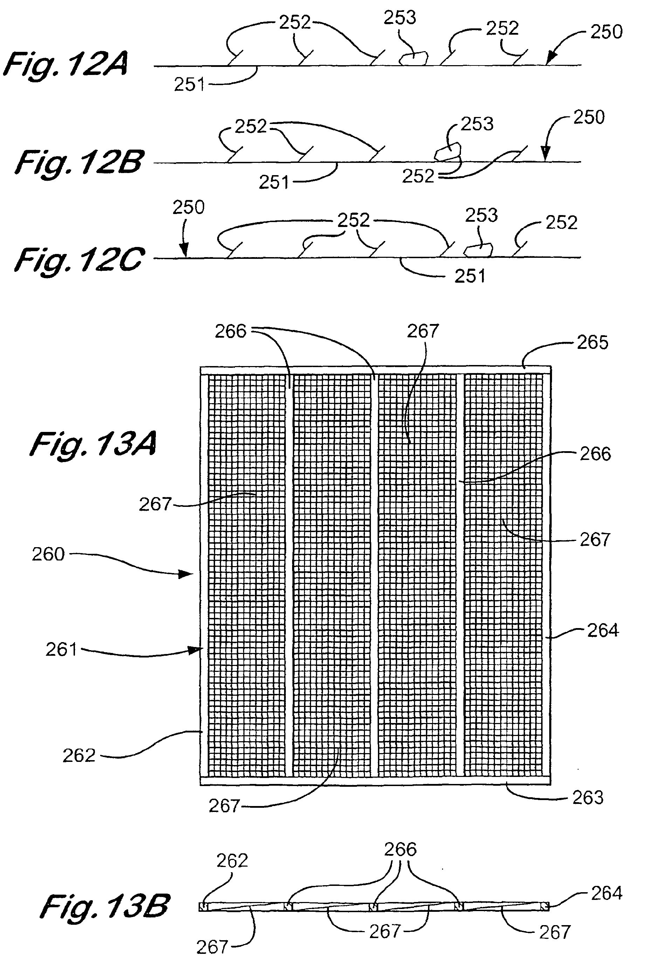

Figure 12A shows a screen 250 according to the present invention with screening material 251 (any disclosed herein or any combination thereof) with spaced-apart ramps 252 connected to the screening material (which may be any ramp herein including, but not limited to, any ramp herein that is a separate piece connected to screening material or any ramp folded from screening material). A mass of solids 253 (for example, solids separated from drilling mud flowing across the screen 250 in a shale shaker) is moving over the screen 250. As shown in Figure 12B, the ramps 252 are configured, sized, and made of such material that the mass of solids 253 moves the ramps downwardly as it passes over them, facilitating movement of the mass of solids across the screen. As shown in Figure 12C the ramp that was moved down by the mass of solids has moved or sprung back to its initial position. In certain prior art machines, a relatively large mass or conglomeration of separated solids might not be able to climb or be moved over an upwardly projecting portion or ramp of a screen.

Figure 13A shows a screen 260 according to the present invention which has a frame 261 made of frame members 262, 263, 264, 265 with a plurality of cross members 266. Between pairs of frame members and cross members, and between pairs of cross members are connected pieces 267 of screening material (any disclosed herein or any combination thereof). Alternatively, a single piece of screening material may be placed over the frame 261 and folded to result in screen part placement as in Figure 13B.

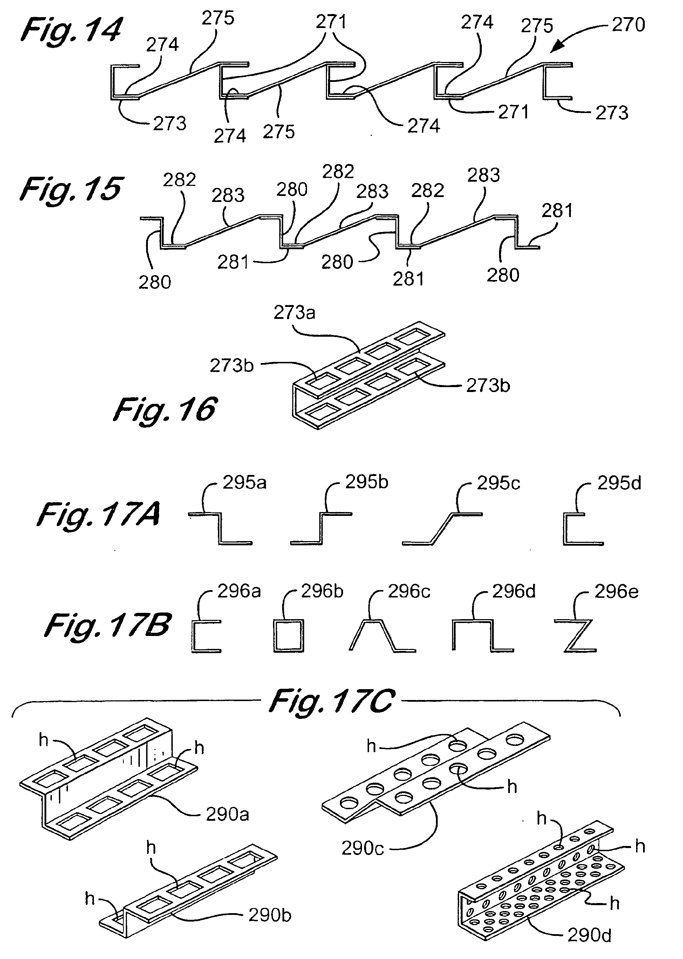

Figures 14, 15 and 16 illustrate various types of frame and cross members useful in screens as in Figure 13A. Figure 14 shows a screen 270 with cross members 271 and frame members 273 having a "C" channel shape when viewed in cross-section; and an end 244 of a piece of screening material 275 is in and connected to each channel.

Figure 15 shows a channel member 280 which may be used for a frame or cross member, for example, but not limited to, in the screens 260 and 270. The channel member 280 has a lower portion 181 on which an end 282 of screening material 283 is placed and to which it is connected. Such a channel may be used for a screen as in Figure 13A. Figure 16 shows a channel member 273a, like the channel member 273, but with holes 273b therethrough.

Figures 17A and 17B show alternative frame and cross member profiles 295a, 295b, 295c, 295d and 296a, 296b, 296c, 296d, 296e, respectively (cross-section) for any of the frame or cross members disclosed above (with or without holes in any or all of the parts of the profiles).

Figure 17C illustrates that any cross member in any frame according to the present invention may have perforations along its length to facilitate solids separation. As shown in cross-section, channel members 290a, 290b, 290c and 290d (shown in cross-section) have holes h therethrough along their lengths. Any series of holes may be deleted from any channel member.

## Claims

1. A screen for a shale shaker, said screen comprising at least one substantially flat layer of screening material (9) **characterised in that** at least one ramp (7) formed of screening material is located on said at least one flat layer of screening material (9), said at least one flat layer of screening material (9) having mesh size substantially equal to or smaller than the mesh size of said at least one ramp (7).

2. A screen as claimed in Claim 1, wherein said at least one ramp (7) comprises a rectangular piece' of screening material having a fold (11) along a substantially straight line along the rectangle's length, forming a first portion (12) adhered or otherwise attached to said at least one flat layer of screening material and a second portion (14) extending therefrom to form a ramp portion.

3. A screen as claimed in any of Claims 1 or 2, wherein said at least one ramp comprises a flat layer of screening material substantially the same size as the at least one flat layer of screening material, said flat layer of screening material having folds therein forming at least one ramp portion.

4. A screen as claimed in any of Claims 1 to 3, wherein said ramp is deformable, in use and, if deformed remains in its deformed state.

5. A screen as claimed in any of Claims 1 to 3, wherein said ramp is reactively deformable, such that, in use, said ramp may deform and subsequently return to substantially its original state.

6. A screen as claimed in any preceding claim, wherein said at least one flat layer of screening material has at least one side, said at least one ramp arranged substantially perpendicularly thereto.

7. A screen as claimed in any preceding claim, wherein said at least one ramp has at least one of the following profiles: flap; wedge shaped; semi-circular; triangular; and wave-like.

8. A screen as claimed in any preceding claim, wherein said at least one ramp is attached to said at least one flat layer of screening material by one of the following means: fasteners; glue or otherwise adhered; welded; and soldered.

9. A screen as claimed in any preceding claim, wherein said ramp has ends, said ends being open.

10. A screen as claimed in any preceding claim, wherein said ramp has ends, said ends covered in screening material

11. A screen as claimed in any preceding claim, wherein said ramp has ends, said ends covered in a solid material to block the passage of material therethrough.

12. A screen as claimed in any preceding claim, comprising a plurality of said at least one ramps, spaced apart along said screen.

13. A screen as claimed in Claim 12, wherein said plurality of spaced apart ramps are aligned with each other.

14. A screen as claimed in Claim 12, wherein said plurality of spaced apart ramps are alternately offset from each other.

15. A screen as claimed in any preceding claim further comprising a further flat layer of screening material arranged beneath said at least one flat layer of screening material.

16. A screen as claimed in any preceding claim, further comprising a layer of coarse mesh arranged beneath said at least one flat layer of screening material.

17. A screen as claimed in any preceding claim, further comprising strips, said at least one flat layer of screening material arranged thereon.

18. A screen as claimed in Claim 17, wherein said at least one flat layer of screening material is adhered, fastened or otherwise attached to said strips.

19. A screen as claimed in any preceding claim, further comprising a perforate plate, said at least one flat layer of screening material arranged thereon.

20. A screen as claimed in Claim 19, wherein said at least one flat layer of screening material is adhered, fastened or otherwise attached to said perforate plate.

21. A screen as claimed in any preceding claim, further comprising hook strips for, in use, attachment to a shale shaker.

22. A screen as claimed in any preceding claim, further comprising a rigid frame.

23. A shale shaker comprising a screen as claimed in any preceding claim, said shale shaker further comprising a vibratory mechanism and a basket.

## Patentansprüche

1. Sieb für einen Schlammschüttler, wobei dieses Sieb zumindest eine im Wesentlichen ebene Lage aus Siebmaterial (9) aufweist, **dadurch gekennzeichnet, dass** zumindest eine Rampe (7) aus Siebmaterial auf der zumindest einen ebenen Lage aus Siebmaterial (9) ausgebildet ist, wobei diese zumindest eine ebene Lage aus Siebmaterial (9) eine Siebgröße hat, die im Wesentlichen gleich der oder kleiner als die Siebgröße der zumindest einen Rampe (7) ist.

2. Sieb nach Anspruch 1, wobei die zumindest eine Rampe (7) ein rechteckiges Stück aus Siebmaterial aufweist, das eine Falte (11) längs einer im Wesentlichen geraden Linie entlang der Länge des Rechteckes aufweist und einen ersten Bereich (12), der in der zumindest einen ebenen Lage aus Siebmaterial anhaftet oder anderweitig mit dieser befestigt ist, und einen zweiten, hiervon wegragenden Bereich (14) aufweist, der einen Rampenbereich bildet.

3. Sieb nach einem der Ansprüche 1 oder 2, wobei die zumindest eine Rampe eine ebene Lage aus Siebmaterial mit im Wesentlichen der gleichen Größe wie die zumindest eine ebene Lage aus Siebmaterial aufweist, wobei diese ebene Lage aus Siebmaterial jeweils Falten aufweist, um zumindest einen Rampenbereich zu bilden.

4. Sieb nach einem der Ansprüche 1 bis 3, wobei die Rampe während des Betriebes deformierbar ist und dann, wenn sie deformiert ist, in dem deformierten Zustand verbleibt.

5. Sieb nach einem der Ansprüche 1 bis 3, wobei die Rampe reaktiv deformierbar ist, sodass im Betrieb die Rampe sich verformen kann und anschließend im Wesentlichen in ihren originalen Zustand zurückkehrt.

6. Sieb nach einem der vorhergehenden Ansprüche, wobei die zumindest eine ebene Lage aus Siebmaterial zumindest eine Seite hat, wobei die zumindest eine Rampe im Wesentlichen senkrecht hierzu angeordnet ist.

7. Sieb nach einem der vorhergehenden Ansprüche, wobei die zumindest eine Rampe zumindest eines der folgenden Profile hat: Klappe; keilförmig; halbkreisförmig; dreieckig und wellenartig.

8. Sieb nach einem der vorhergehenden Ansprüche, wobei die zumindest eine Rampe mit der zumindest einen ebenen Lage aus Siebmaterial durch eines der folgenden Mittel verbunden ist: Befestiger; Kleber oder anderweitig angeheftet; verschweißt; und verlötet.

9. Sieb nach einem der vorhergehenden Ansprüche, wobei die Rampe Enden hat, und diese Enden offen sind.

10. Sieb nach einem der vorhergehenden Ansprüche, wobei die Rampe Enden hat und diese Enden mit Siebmaterial bedeckt sind.

11. Sieb nach einem der vorhergehenden Ansprüche, wobei die Rampe Enden hat und die Enden mit einem festen Material bedeckt sind, um eine Passage von Material durch die Enden zu blockieren.

12. Sieb nach einem der vorhergehenden Ansprüche, das mehrere solcher solcher einzelnen Rampen aufweist, die entlang des Siebes mit Abstand angeordnet sind.

13. Sieb nach Anspruch 12, wobei die mehreren mit Abstand voneinander angeordneten Rampen in der gleichen Richtung ausgerichtet sind.

14. Sieb nach Anspruch 12, wobei die mehreren mit Abstand angeordneten Rampen im Wechsel zueinander versetzt sind.

15. Sieb nach einem der vorhergehenden Ansprüche, das ferner eine weitere ebene Lage aus Siebmaterial unterhalb der zumindest einen ebenen Lage aus Siebmaterial aufweist.

16. Sieb nach einem der vorhergehenden Ansprüche, das ferner eine Lage mit groben Maschen aufweist, die unterhalb der zumindest einen ebenen Lage aus Siebmaterial angeordnet ist.

17. Sieb nach einem der vorhergehenden Ansprüche, das ferner Streifen aufweist, wobei die zumindest eine ebene Lage aus Siebmaterial darauf angeordnet ist.

18. Sieb nach Anspruch 17, wobei die zumindest eine ebene Lage aus Siebmaterial mit den Streifen verbunden, mit diesen befestigt oder anderweitig verbunden ist.

19. Sieb nach einem der vorhergehenden Ansprüche, das ferner eine perforierte Platte aufweist, wobei die zumindest eine ebene Lage aus Siebmaterial darauf angeordnet ist.

20. Sieb nach Anspruch 19, wobei die zumindest eine ebene Lage aus Siebmaterial mit der perforierten Platte verbunden, befestigt oder anderweitig verbunden ist.

21. Sieb nach einem der vorhergehenden Ansprüche, das ferner Hakenstreifen aufweist, um im Betrieb eine Verbindung zu einem Schlammschüttler zu schaffen.

22. Sieb nach einem der vorhergehenden Ansprüche, das ferner einen festen Rahmen aufweist.

23. Schlammschüttler mit einem Sieb gemäß einem der vorhergehenden Ansprüche, wobei der Schlammschüttler ferner einen Vibrationsmechanismus und einen Korb aufweist.

## Revendications

1. Crible destiné à un tamis vibrant, ledit crible comprenant au moins une couche essentiellement plane de matériau de criblage (9) **caractérisé en ce qu'**au moins une déclivité (7) formée du matériau de criblage est placée sur ladite (lesdites) couche(s) plane(s) de matériau de criblage (9), ladite (lesdits) couche(s) plane(s) de matériau de criblage (9) ayant une dimension de maille essentiellement égale à, ou plus petite que, la dimension de maille de ladite (desdites) déclivité(s) (7).

2. Crible selon la revendication 1, dans lequel ladite (lesdites) déclivité(s) (7) comporte(nt) une pièce rectangulaire de matériau de criblage présentant un pli (11) le long d'une ligne essentiellement droite sur la longueur du rectangle, formant une première partie (12) collée ou fixée d'une autre manière à ladite (aux dites) couche(s) plane(s) de matériau de criblage et une seconde partie (14) s'étendant à partir d'elle pour former une partie de déclivité.

3. Crible selon l'une quelconque des revendications 1 ou 2, dans lequel ladite (lesdites) déclivité(s) comprend (comprennent) une couche plane de matériau de criblage essentiellement de la même dimension que ladite (lesdites) couche(s) plane(s) de matériau de criblage, ladite couche plane de matériau de criblage comportant en elle des plis constituant au moins une partie de déclivité.

4. Crible selon l'une quelconque des revendications 1 à 3, dans lequel ladite déclivité est déformable, lors de l'utilisation, et, si elle est déformée, elle reste dans son état déformé.

5. Crible selon l'une quelconque des revendications 1 à 3, dans lequel ladite déclivité est déformable de façon réactive, de telle sorte que, lors de l'utilisation, ladite déclivité peut se déformer et revenir ultérieurement sensiblement à son état initial.

6. Crible selon l'une quelconque des revendications précédentes, dans lequel ladite (lesdites) couche(s) plane(s) de matériau de criblage possède(nt) au moins un côté, ladite (lesdites) déclivité(s) étant disposée(s) de façon essentiellement perpendiculaire à celui-ci.

7. Crible selon l'une quelconque des revendications précédentes, dans lequel ladite (lesdites) déclivité(s) présente(nt) au moins l'un des profils suivants :rabat, configuré en coin ; semi-circulaire ; triangulaire ; et de type ondulé.

8. Crible selon l'une quelconque des revendications précédentes, dans lequel ladite (lesdites) déclivité(s) est (sont) fixée(s) à ladite (aux dites) couche(s) plane(s) de matériau de criblage par l'un des moyens suivants : attaches ; colle ou autre moyen d'adhérence; soudure ; et brasure.

9. Crible selon l'une quelconque des revendications précédentes, dans lequel ladite déclivité possède des extrémités, lesdites extrémités étant ouvertes.

10. Crible selon l'une quelconque des revendications précédentes, dans lequel ladite déclivité possède des extrémités, lesdites extrémités étant recouvertes du matériau de criblage.

11. Crible selon l'une quelconque des revendications précédentes, dans lequel ladite déclivité possède des extrémités, lesdites extrémités étant recouvertes d'un matériau solide pour bloquer le passage du matériau à travers elles.

12. Crible selon l'une quelconque des revendications précédentes, comprenant une pluralité desdites déclivités, placées à distance l'une de l'autre le long dudit crible.

13. Crible selon la revendication 12, dans lequel les dites nombreuses déclivités placées à distance l'une de l'autre sont alignées l'une avec l'autre.

14. Crible selon la revendication 12, dans lequel les dites nombreuses déclivités placées à distance l'une de l'autre sont décalées en alternance l'une de l'autre.

15. Crible selon l'une quelconque des revendications précédentes comprenant, de plus, une autre couche plane de matériau de criblage disposée au-dessous de ladite (desdites) couche(s) plane(s) de matériau de criblage.

16. Crible selon l'une quelconque des revendications précédentes comprenant, de plus, une couche de maille grossière disposée au-dessous de ladite (desdites) couche(s) plane(s) de matériau de criblage.

17. Crible selon l'une quelconque des revendications précédentes comprenant, de plus, des bandes, sur lesquelles ladite (lesdites) couche(s) plane(s) de matériau de criblage est (sont) disposée(s).

18. Crible selon la revendication 17, dans lequel ladite (lesdites) couche(s) plane(s) de matériau de criblage est (sont) collée(s), fixée(s) ou attachée(s) d'une autre manière aux dites bandes.

19. Crible selon l'une quelconque des revendications précédentes comprenant, de plus, une plaque perforée sur laquelle ladite (lesdites) couche(s) plane(s) de matériau de criblage est (sont) disposée(s.

20. Crible selon la revendication 19, dans lequel ladite (lesdites) couche(s) plane(s) de matériau de criblage est (sont) collée(s), fixée(s) ou attachée(s) d'une autre manière à ladite plaque perforée.

21. Crible selon l'une quelconque des revendications précédentes comprenant, de plus, des bandes à crochets en vue, lors de l'utilisation, d'une fixation à un tamis vibrant.

22. Crible selon l'une quelconque des revendications précédentes comprenant, de plus, un châssis rigide.

23. Tamis vibrant comprenant un crible selon l'une quelconque des revendications précédentes, ledit tamis vibrant comportant, de plus, un mécanisme vibratoire et un panier.
